Europäisches Patentamt

European Patent Office

Office européen des brevets

(19)

(11) Veröffentlichungsnummer: **0 240 915**
**B1**

(12) **EUROPÄISCHE PATENTSCHRIFT**

(45) Veröffentlichungstag der Patentschrift: **27.06.90**

(21) Anmeldenummer: **87104777.5**

(22) Anmeldetag: **31.03.87**

(51) Int. Cl.⁵: **H 01 M 2/18,** H 01 M 2/16,
H 01 M 10/12, H 01 M 10/14

(54) **Verfahren zum Herstellen von Akkumulatoren mit Akkumulatorplattensätzen und nach diesem Verfahren hergestellter Akkumulator.**

(30) Priorität: **02.04.86 DE 3610952**

(43) Veröffentlichungstag der Anmeldung:
**14.10.87 Patentblatt 87/42**

(45) Bekanntmachung des Hinweises auf die
Patenterteilung:
**27.06.90 Patentblatt 90/26**

(84) Benannte Vertragsstaaten:
**AT BE CH ES FR GB IT LI SE**

(56) Entgegenhaltungen:
**DE-A-3 304 257**
**DE-B-2 330 134**
**US-A-4 080 727**
**US-A-4 509 252**

(73) Patentinhaber: **HAGEN Batterie AG**
**Thomästrasse 27/28**
**D-4770 Soest (DE)**

(72) Erfinder: **Römling, Ulrich, Dipl.-Ing.**
**Milchstrasse 8**
**D-4770 Soest-Meckingsen (DE)**
Erfinder: **Nann, Eberhard, Dr.**
**Schmückersweg 2**
**D-4770 Soest-Deiringsen (DE)**
Erfinder: **Mühlhan, Udo D.**
**Im Maisel 3**
**D-5204 Taunusstein 5 (DE)**
Erfinder: **Wipperfürth, Walter**
**Im Maisel 3**
**D-5204 Taunusstein 5 (DE)**

(74) Vertreter: **Manitz, Gerhart, Dipl.-Phys. Dr. et al**
**MANITZ, FINSTERWALD & ROTERMUND**
**Robert-Koch-Strasse 1**
**D-8000 München 22 (DE)**

Courier Press, Leamington Spa, England.

EP 0 240 915 B1

**Beschreibung**

Die Erfindung betrifft ein Verfahren zum Herstellen von Akkumulatoren mit einem Akkumulatorengehäuse und darin angeordneten Akkumulatorplattensätzen mit abwechselnd positiven und negativen, durch ein Separatormaterial voneinander getrennten Platten, bei dem zur Bildung von Taschen zumindest um eine Sorte von Platten, bevorzugt die positiven Platten, jeweils ein Separatorblatt herumgefaltet und zumindest die an den Faltrand angrenzenden Seitenränder fest miteinander verbunden werden, worauf die eingetaschten Platten und die ggfs. nicht eingetaschten Platten zu Plattensätzen gestapelt und in ein Akkumulatorgehäuse eingebracht werden, wonach die Interzellenverschweißung und der Verschluß des Akkumulatorengehäuses erfolgen.

Bei einem derartigen Verfahren (DE-OS 33 04 257) erfolgt die Eintaschung der positiven Platte in aus Separatormaterial hergestellten Taschen zu dem Zweck, Kurzschlüsse am Boden des Plattensatzes beim Absetzen des positiven Schlamms zu vermeiden. Nach Pastierung der negativen und positiven Platten sowie Formation werden die positiven Platten dadurch eingetascht, daß von einer Separatorbandrolle eine doppelt so breit wie die positiven Platten dimensionierte Bahn abläuft, die durch geeignete Umlenkeinrichtungen derart gefaltet wird, daß eine nach einer Seite offene, beliebig lange Tasche entsteht, in die die Platten in festen Abständen eingeschoben werden. Anschließend durchläuft dann das mit den eingeschobenen positiven Platten versehene, gefaltete Separatorband eine Schweißstation, wobei durch Verschweißung der beiden Taschenhälften im Bereich der Seitenränder der eingeschobenen Platten die individuellen Einzeltaschen gebildet werden. Durch Zerschneiden des gefalteten Bandes im Bereich der Seitenrandschweißungen werden dann schließlich die Einzeltaschen gebildet.

Bei dem bekannten Verfahren müssen für das Separatorband schweißbare, gleichwohl aber permeable Kunststoffolien verwendet werden. Das Separatorbandmaterial kann also nicht allein nach den Kriterien für ein günstiges Separatormaterial gewählt werden, sondern muß auch noch die für die Verwirklichung einer festen und dichten Schweißung notwendigen Eigenschaften aufweisen. Im allgemeinen sind derartige Separatorbänder sehr dünn und erfordern an den Plattensätzen besondere Maßnahmen, um einen vorbestimmten Abstand der zu Plattensätzen zusammengelegten Platten zu gewährleisten. Auch das Erfordernis, das Separatorband am laufenden Band mit einer in seiner Längsrichtung verlaufenden Falte kontinuierlich zu der zunächst durchgehenden Tasche zu verformen, beschränkt die Zahl der verwendbaren Materialien. Die Längsfaltung am laufenden Band führt nämlich zu erheblichen Beanspruchungen des Bandmaterials, wozu eine gewisse Mindestfestigkeit erforderlich ist, wie sie insbesondere bei sehr saugfähigen, für Separatorzwecke besonders geeigneten Bandmaterialien nicht vorliegt.

Bei einem anderen bekannten Verfahren (DE-AS 12 52 292) werden abwechselnd positive und negative Platten auf ein bandförmiges Scheidermaterial aufgelegt, worauf auf diese Anordnung ein weiteres Band aus Separatormaterial aufgelegt und im Bereich der Seitenränder der Platten eine Schweißung erfolgt. Der Plattensatz wird dann durch Faltung dieser Anordnung hergestellt. Bei diesen bekannten Verfahren sind die Böden der Taschen offen, so daß eine echte Eintaschung der positiven Platten nicht vorliegt. Auch bei diesem bekannten Verfahren ist die Wahl für das Separatormaterial erheblich eingeschränkt.

Ein weiteres bekanntes Verfahren (US-PS 40 63 978) arbeitet mit einzelnen Separatorblättern von doppelter Höhe wie die einzutaschenden Platten, wobei das Separatorband von unten um die Platten herumgefaltet wird und anschließend eine Verschweißung am Rande erfolgt. Auch bei diesem bekannten Verfahren muß ein thermoplastisches Separatormaterial verwendet werden, welches bei Erhitzung klebrig wird.

Schließlich ist es bereits bekannt (US-PS 45 09 252), um aus positiven und negativen Platten bestehende Plattensätze vor dem Einsetzen in das Zellengehäuse zwei im vertikalen Abstand angeordnete Rahmen herumzulegen, die nur die Seiten- und Stirnwände, nicht aber Ober- und Unterseite des Plattensatzes umfassen.

Das Ziel der Erfindung besteht nun darin, ein Verfahren der eingangs genannten Gattung zu schaffen, bei dem ausschließlich nach optimalen elektrochemischen Eigenschaften, wie Elektrolytaufnahme und die Abstandshaltung, ausgewähltes Material für die Separatorblätter verwendet werden kann und durch das eine vorbestimmte Druckspannung im Innern der Plattensätze in Richtung senkrecht zu den Plattenebenen gewährleistet wird.

Zur Lösung dieser Aufgabe sieht die Erfindung vor, das die aus Glasvlies bestehenden Separatorblätter auf etwas mehr als die einfache oder doppelte Fläche der einzutaschenden Platten zugeschnitten und wenigstens entlang den Seitenrändern und bevorzugt auch entlang der Oberränder und ggfs. der Unterränder mit einem schwefelsäurefesten Glasvlies-Kunststoff versehen werden, worauf die Platten zwischen je zwei Separatorblättern angeordnet sowie die über die Platten vorstehenden, aufeinander zu liegen kommenden Ränder der Separatorblätter aufeinandergepreßt und ggfs. durchschnitten werden, bis der Klebstoff ausgehärtet ist, und daß die gestapelten Plattensätze senkrecht zur Plattenebene unter einen vorbestimmten plattensolldruck gesetzt und durch eine an dem plattensatz angelegten Spannvorrichtung dieser plattensolldruck zumindest solange aufrechterhalten wird, bis der Plattensatz sich im Akkumulatorgehäuse befindet, wobei dann der Plattensolldruck durch feste Anlage der Stirnseiten des Plattensatzes an festen Teilen des Akkumulatorgehäuses aufrechterhalten wird.

Erfindungsgemäß werden also Separatorblätter aus elastisch zusammendrückbarem Glasvlies verwendet, welches zweckmäßig ein Mikroglasvlies mit einem mittleren Glasfaserdurchmesser von 0,5 bis 5 und insbesondere etwa 0,7 µ und einer maximalen Porengröße von 0,1 bis 40, insbesondere etwa 1 µ ist. Weiter soll das verwendete Glasvlies vor dem Zusammenpressen des Plattensatzes eine Stärke von 0,5 bis 3 und insbesondere etwa 2 mm haben.

Ein derartiges, sehr saugfähiges und relativ voluminöses Glasvlies kann ein erhebliches Säurevolumen aufnehmen und ist gleichzeitig dazu geeignet, in Verbindung mit der von außen aufgebrachten Druckspannung einen definierten Abstand zwischen den einzelnen Platten zu gewährleisten. Die Verwendung des im allgemeinen nicht schweißbaren Glasvlieses wird dadurch ermöglicht, daß die die Taschen vervollständigende Verbindung der Seitenränder und ggfs. des Oberrandes der aufeinandergefalteten Separatorblätter durch eine Beleimung gewährleistet wird. Die Wahl des Seperatormaterials ist somit also unabhängig von eine Verschweißung ermöglichenden Eigenschaften. Von besonderer Bedeutung ist die Aufrechterhaltung einer vorbestimmten und von Plattensatz zu Plattensatz konstanten Druckvorspannung senkrecht zu den Plattenebenen, weil hierdurch das Maß der elastischen Zusammendrückung der Glasvlies-Separatorbänder senkrecht zu ihrer Ebene genau eingestellt wird, so daß alle nach diesem Verfahren hergestellten Akkumulatoren die gleichen elektrischen Eigenschaften aufweisen. Die im Vergleich zur Druckfestigkeit geringe Zugfestigkeit eines Glasvlieses erweist sich wegen der erfindungsgemäßen Verfahrensführung nicht als Hemmnis. Aufgrund der erfindungsgemäßen Art und Weise der Plattensatzfertigung können auch fertigungsbedingte Toleranzen in den Plattenstärken problemlos ausgeglichen werden, da nunmehr stets der gleiche Druck auf die Plattensätze ausgeübt wird.

Bevorzugt besteht die Spannvorrichtung aus zumindest einem um den Plattensatz herumgeschlungenen schwefelsäurefesten Band. Vorteilhafterweise sind mindestens zwei Bänder im seitlichen Abstand um den Plattensatz herumgeschlungen.

Um gleichzeitig eine rüttelfeste Anordnung für die einzelnen zusammengepackten Platten zu erzielen, soll weiter vorgesehen sein, daß die Bänder um die Stirnflächen sowie Ober- und Unterseiten des Plattensatzes herumgeschlungen sind. Auf diese Weise werden insbesondere vertikale Verschiebungen der Platten relativ zueinander bei Erschütterungen wirksam vermieden. Die betreffende Anordnung der Bänder hat weiter den Vorteil, daß sie sich auch über den Boden des Plattensatzes erstrecken und dort die Falten verstärken, die für das Abfangen des sich absetzenden positiven Schlamms sehr wichtig sind.

Da durch die Anbringung einer vorbestimmten Druckvorspannung an die Plattensätze deren Länge senkrecht zu den Plattenebenen aufgrund der üblichen Herstellungstoleranzen der Platten und des Separatorbandmaterials schwanken kann, soll nach einer weiteren vorteilhaften Ausführungsform vorgesehen sein, daß der Plattensatz vor dem Einbringen in das Akkumulatorgehäuse durch Anordnen von Beilagfolien oder -platten auf eine durch den Innenraum des Akkumulatorgehäuses bestimmte konstante Länge gebracht werden.

Die Beilagfolien bestehen in erster Linie aus einem glatten, und/oder porösen schwefelsäurebeständigen Kunststoff wie PVC. Grundsätzlich könnten aber zum Ausgleich größerer Toleranzen neben Kunststoffplatten auch Glasvliesplatten als Beilagplatten verwendet werden.

Um insbesondere die an der Unterseite des Plattensatzes befindlichen Falten der einzelnen Taschen gegen Beschädigung zu schützen und zu verstärken ist eine weitere Ausführungsform so ausgebildet, daß der Plattensatz zwei axial äußere Beilagfolien oder -platten aufweist, die unten durch eine Bodenfolie- oder -platte zu einer U-förmigen äußeren Abdeckfolie oder -platte vereinigt sind, die außen von den Bändern umschlungen wird. In diesem Fall wird also um das gesamte Plattenpaket herum eine U-förmige Abdeckfolie- oder -platte herumgelegt. Um diese Anordnung werden dann die die Druckvorspannung fixierenden Bänder herumgeschlungen.

Durch die Verklebung der Seitenränder der Separatorblätter entsteht an den Seiten des Plattensatzes eine Anordnung von um z.B. 5 mm über die Seitenränder der Platten vorstehenden Verklebungsstreifen, welche beim Einsetzen der Plattensätze in das Akkumulatorgehäuse mit der Innenwand des Gehäuses in Eingriff kommt, wodurch eine elastische und nachgiebige seitliche Abstützung der Plattensätze im Gehäuse gewährleistet wird. Da diese überstehenden Verklebungsstreifen sich durch Stauchung und seitliche Abbiegung relativ leicht verformen lassen, wird somit auch in seitlicher Richtung der Plattensätze ein erheblicher Toleranzausgleich gewährleistet.

Von besonderer Bedeutung ist, daß ein Klebstoff verwendet wird, der im wesentlichen lediglich senkrecht zur Auftragsfläche in das Glasvlies eindringt, nicht aber parallel zur Fläche in das Glasvlies eingesaugt wird. Der verwendete Klebstoff soll also dort, wo er aufgebracht wird, eine innige Verbindung mit dem Glasvliesmaterial eingehen, sich aufgrund von Kapillarkräften aber nicht in die für die Separatorwirkung wichtigen ebenen Flächen der Separatorbänder hineinziehen lassen.

Weiter ist es zweckmäßig, wenn ein Klebstoff verwendet wird, der das verklebte Glasvlies versteift aber trotzdem biegsam hält und seine Porosität auch an den von ihm beaufschlagten Stellen nicht beseitigt. Auf diese Weise behalten auch die überstehenden Verklebstreifen der Separatorbänder noch eine ausreichende Aufnahmekapazität für die Schwefelsäure.

Nach einer ersten praktischen Ausführungsform wird als Klebstoff eine wässrige Dispersion von Vinylesterkopolymerisaten verwendet.

Eine andere Möglichkeit besteht darin, daß als Klebstoff ein schwefelsäurefester Schmelzkleber verwendet wird, der vorzugsweise hochtixotrop ist. Ein Schmelzkleber hat den Vorteil, daß er ggfs. sehr schnell aushärten kann bzw. der Härtegrad genau definiert eingestellt werden kann.

Es ist möglich, die Eintaschung der Platten dadurch vorzunehmen, daß zwei laufende Bahnen von Glasvlies verwendet werden, wobei die erste Bahn über den Auflegetisch geführt ist und nur geringfügig breiter ist, als die Platten hoch sind. Über diese erste Bahn wird dann eien zweite Glasvlies-Bahn geführt, und nach dem Aufbringen des Klebstoffes werden die Bahnen unter Einschluß der Platten aufeinandergelegt und miteinander verklebt. Der Anpreßvorgang könnte dann zweckmäßigerweise mit dem Auseinanderschneiden der einzelnen Plattentaschen kombiniert werden.

Es ist auch möglich, in dieser Weise zwei Glasvlies-Bahnen von etwas mehr als der doppelten Höhe der Platten zu verwenden und gleichzeitig zwei Platten zwischen den beiden übereinander geführten Glasvlies-Bahnen einzutaschen. Durch Zerschneiden können so Doppeltaschen geschaffen werden, deren beide Hälften dann um eine dazwischengelegte negative Elektrodenplatte heraumgeklappt werden. Auf diese Weise kann eine sehr hohe Eintaschgeschwindigkeit erzielt werden.

Bevorzugt ist es jedoch, wenn die aus Glasvlies bestehenden Separatorblätter auf etwas mehr als die doppelte Fläche der einzutaschenden Platten zugeschnitten und entlang der Seitenränder und bevorzugt auch entlang der Oberränder mit einem schwefelsäurefesten Glasvlies-Klebstoff versehen werden, worauf die Separatorblätter um die Platten herumgefaltet sowie die aufeinander zu liegen kommenden Ränder aufeinandergepreßt werden, bis der Klebstoff ausgehärtet ist, wobei vorzugsweise auch der Faltrand mit einem schwefelsäurefesten Versteifungsklebstoff versehen wird. Auf diese Weise wird der Faltrand durch den Versteifungsklebstoff wesentlich widerstandsfähiger gegen die schneidenartige Wirkung der eingetaschten Platten gemacht.

Nachdem das für die Separatorbänder verwendete Glasvlies gegen die schneidenartige Wirkung der eingetaschten Platten nicht besonders widerstandsfähig ist, ist es zweckmäßig, wenn auch der Faltrand mit einem schwefelsäurefesten Versteifungsklebstoff versehen wird.

Der Klebstoff wirkt hier lediglich versteifend und verhindert, daß der Faltrand, der ja auf dem Boden des Akkumulatorgehäuses aufsitzt, mechanisch beschädigt oder zerstört wird, was zu Kurzschlüssen innerhalb des Plattensatzes führen könnte.

Die zwischen den positiven und negativen Platten liegenden Bereiche der Glasvliesbänder sind durch das feste Einpressen zwischen den Platten so geschützt, daß hier die an sich geringe mechanische Widerstandsfähigkeit keinen Nachteil darstellt. Mit anderen Worten wird das Glasvliesband durch das Einpressen zwischen zwei Elektrodenplatten stabilisiert. Die seitlich bzw. unten überstehenden Bereiche der Glasvliesbänder werden aber bevorzugt durch den aufgebrachten Klebstoff versteift und damit mechanisch verfestigt.

Herstellungsmäßig besonders einfach ist es, wenn der Versteifungsklebstoff zusammen mit dem die übrigen Ränder verklebenden Kunststoff vor dem Falten aufgebracht wird und vorzugsweise von gleicher Art wie der die übrigen Ränder verklebende Kunststoff ist.

Es ist aber auch möglich, daß der Versteifungskleber nach dem Bilden der Plattensätze von außen auf dessen Unterseite aufgebracht wird.

Schließlich sieht eine weitere Ausführungsform vor, daß der Versteifungsklebstoff auf die Unterseite des Plattensatzes nach dem Erzeugen des Plattensolldruckes und vorzugsweise vor dem Anbringen der Bänder aufgebracht wird.

Um die Tatsache zu berücksichtigen, daß die Taschen der positiven Platten unten weiter vorstehen als die negativen Platten ist eine praktische Ausführungsform des erfindungsgemäßen Verfahrens so gewählt, daß ein entsprechend der Anordnung von eingetaschten positiven und dazwischenliegenden negativen Platten profilierte Platte aus einem schmelzenden Versteifungskleber auf die Unterseite des Plattensatzes aufgebracht und durch Erhitzen mit den Falten der Separatorblätter verbunden wird.

Grundsätzlich ist es möglich, daß die zunächst von den Bändern aufrechterhaltene Druckvorspannung in den Plattensätzen nach dem paßgenauen Einsetzen in das Akkumulatorgehäuse von den Stirnwänden des Akkumulatorgehäuses aufrechterhalten wird. Dies ist auch deswegen zweckmäßig, weil die Bänder nur entlang ihrer Anlagefläche am Plattensatz eine Druckausübung bewirken, während dazwischen unter Umständen Ausbeulungen der Platten bzw. der Separatorbänder möglich sind. Sofern die Stirnwände des Akkumulatorgehäuses die Aufrechterhaltung der Druckvorspannung vornehmen, könnten die Bänder durchaus so ausgebildet sein, daß sie sich in der Akkumulatorsäure auflösen oder zumindest ihre Spannung verlieren.

Bevorzugt bestehen aber die Bänder aus einer säurefesten Polycarbonatfolie, welche auch über längere Betriebszeiten innerhalb von Schwefelsäure ihre voreingestellten Zugspannungen beibehalten. Dies ist deswegen vorteilhaft, weil die über die Oberseite des Plattensatzes sich erstreckenden Teile der Bänder dort die Rüttelfestigkeit mitbestimmen.

Die Erfindung betrifft auch einen nach dem erfindungsgemäßen Verfahren hergestellten Akkumulator sowie eine Vorrichtung zur Ausführung des Verfahrens nach den Ansprüchen 20 bis 23.

Die Erfindung wird im folgenden beispielsweise anhand der Zeichnung beschrieben; in dieser zeigt:

Fig. 1 eine schematische perspektivische Ansicht einer Vorrichtung zur Ausführung eines Verfahrens zum Herstellen von eingetaschten positiven Platten,

Fig. 2 eine schematische Seitenansicht einer Vorrichtung zur Weiterverarbeitung der in der Vorrichtung nach Fig. 1 hergestellten eingetaschten positiven Platten,

Fig. 3 eine schematische perspektivische Ansicht eines nach dem Verfahren gemäß der Erfindung hergestellten Akkumulatorplattensatzes unmittelbar vor dem Einsetzen in ein ebenfalls dargestelltes Akkumulatorengehäuse, wobei der Anschaulichkeit halber die Dicke der nicht eingetaschten negativen Platten etwas übertrieben dargestellt ist, um zeichnerisch zwischen benachbarten Taschen einen tatsächlich kaum vorhandenen Abstand in Erscheinung treten zu lassen,

Fig. 4 einen Schnitt nach Linie IV—IV in Fig. 3, bei in das Akkumulatorengehäuse eingesetztem Akkumulatorenplattensatz und

Fig. 5 schematisch den Ausschnitt V in Fig. 4 in vergrößertem Maßstab zur Veranschaulichung eines bevorzugten Verfahrens zum Versteifen der Taschenfalten.

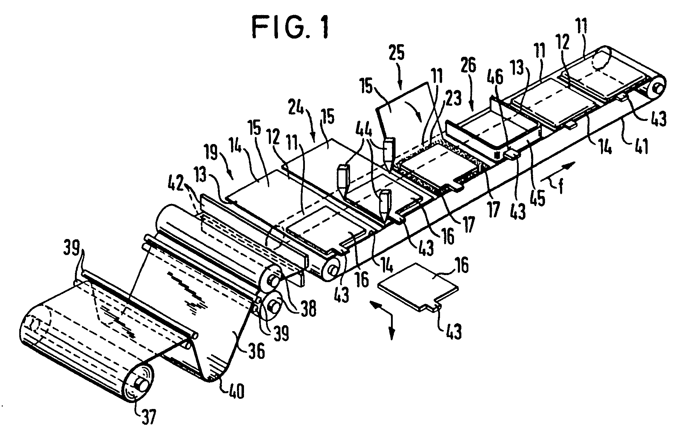

Nach Fig. 1 wird eine Glasvlies-Bahn 36 von einer Vorratsrolle 37 durch ein Abzugsrollenpaar 38 über einen Einlauftisch 39 eingezogen wobei die Rollen 37 und 38 z.B. angetrieben sind. Die Breite der Bahn 36 ist etwas größer als die doppelte Höhe der einzutaschenden positiven Akkumulatorplatten 16.

Der Einlauftisch 39 wird durch Umlenkrollen in Verbindung mit Vorzugsrollenpaaren gebildet, die die Glasvlies-Bahn 36 dem Abzugsrollenpaar 38 zuführen. Die zwischen den Umlenkrollen bzw. Vorzugsrollenpaaren gebildete, nach unten durchhängende Schleife 40 hat den Zweck, die Glasvliesbahn 36 nicht einer Zugbelastung auszusetzen und ferner zu verhindern, daß bei den nachfolgenden Verfahrensschritten Materialstauchungen entstehen.

Im Anschluß an das Abzugsrollenpaar weist die erfindungsgemäße Vorrichtung ausgerichtet mit der rechten Hälfte des Abzugsrollenpaares 38 ein Förderband 41 auf, welches eine Breite etwas größer als die Höhe der Platten 16 besitzt.

Neben dem Förderband 41 befindet sich parallel zu ihm eine nicht dargestellte Unterstützungsebene, auf welcher die nicht auf dem Förderband 41 aufliegenden Bereiche der Separatorblätter 15 zu liegen kommen.

Zwischen dem Abzugsrollenpaar 38 und dem Beginn des Förderbandes 41 befindet sich ein Querschneidemesser 42, durch welches die zugelieferte Glasvlies-Bahn 36 in einzelne Separatorblätter 15 zerschnitten wird, deren Abmessung in Transportrichtung f etwas größer als die Breite der Platte 16 ist.

Unmittelbar am Beginn des Förderbandes 41 befindet sich eine Plattenauflegestation 19, innerhalb der jeweils eine von einem nicht dargestellten Plattenmagazin seitlich angelieferte positive Gitter-Platte 16 mit einer Anschlußfahne 43 auf die auf dem Förderband 41 befindliche Hälfte des Separatorblattes 15 aufgelegt wird, wobei die Anschlußfahne 43 über den von der anderen Hälfte des Separatorblattes 15 abgewandten Oberrand 14 hinaus vorsteht.

Eine elektronische Längenmessung stoppt das Abzugsrollenpaar 38 beim Erreichen der vorher eingestellten Glasvliestaschenbreite. Mit einem nicht dargestellten Schwenkarm wird aus dem seitlich zum Förderband 41 angebrachten Plattenmagazin mit Vakuumsaugern eine Bleiakkumulatorenplatte 16 entnommen und zentriert auf die eine Hälfte des aus Glasvlies bestehenden Separatorblattes 15 aufgelegt.

Das Separatorblatt 15 mit der darauf angeordneten Platte 16 wird dann vom Förderband 41 zur anschließenden Beleimungsstation 24 befördert, wo mittels Leimaufbringungsdüsen auf die über die Platte 16 vorstehenden Seitenränder 12, 13 sowie den Oberrand 14 ein Klebstoff bestehend aus einer wässrigen Dispersion von Vinylesterkopolymerisaten aufgebracht wird. Hierdurch werden auf der die Platte 16 tragenden Hälfte jedes Separatorblattes 15 rundum dünne Schichten aus Klebstoff 17 bzw. einem Versteifungsklebstoff 23 aufgebracht. Der Versteifungsklebstoff 23 kann prinzipiell aus dem gleichen Material wie der für die übrigen Ränder bestimmte Klebstoff 17 bestehen; da jedoch der Versteifungsklebstoff 23 im Bereich des in der anschließenden Faltstation 25 gebildeten Faltrandes 11 angebracht wird, wo an sich keine Klebung, sondern lediglich eine Versteifung vorgenommen werden soll, handelt es sich bei dem Versteifungsklebstoffvorzugsweise um einen solchen, welcher in erster Linie für die Versteifung und Stabilisierung des Faltrandes 11 geeignet ist.

In der Faltstation wird mittels der Platte 16 die Faltkante bzw. der Faltrand 11 des Separatorblattes 15 vorgefaltet.

Von der Faltstation 25, in welcher die nicht mit der Platte 16 belegte Hälfte des Separatorblattes 15 in der aus Fig. 1 ersichtlichen Weise unter Bildung des Faltrandes 11 nach oben und schließlich auf die Platte 16 herumgeschlagen wird, gelangt die nunmehr bereits als Tasche ausgebildete Anordnung aus dem Separatorblatt 15 und der darin eingeschlossenen Platte 16 zu einer Andruckstation 26, wo von oben ein U-förmiger Rahmen 45, der einen Ausschnitt 46 für die Anschlußfahne 43 aufweist von oben auf die Seitenränder 12, 13 sowie dem Oberrand 14 gepreßt wird, wodurch die aufeinander zu liegen kommenden Ränder mit der Leimschicht dazwischen gegeneinander gepreßt werden, bis der Klebstoff abgebunden hat.

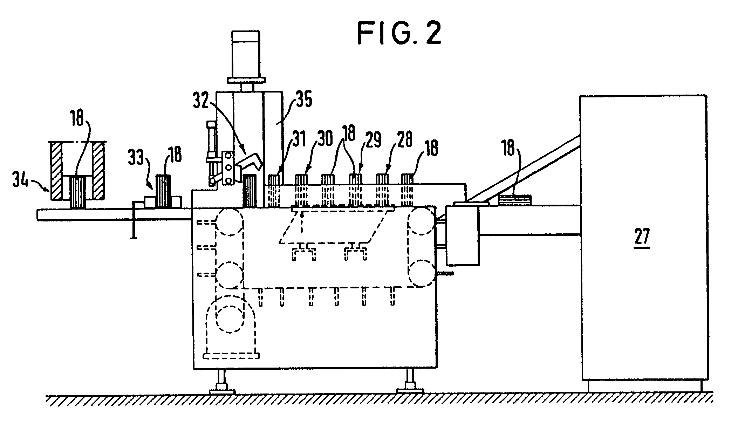

Am Ende des Förderbandes 41 liegen schließlich die fertig eingetaschten positiven Platten 16 vor, die dann vom Förderband 41 in die in Fig. 2 schematisch angedeutete Plattenstapelstation 27 eingeführt werden, wo die eingetaschten positiven Platten 16 mit nicht eingetaschten negativen Platten 16' abwechselnd auf einander gelegt werden, um einen Akkumulatorenplattensatz 18 zu schaffen, der nach Fig. 2 aus der Plattenstapelstation 27 austritt. Der Plattensatz 18 gelangt dann nach Fig. 2 zu einer Prüfstation 28, wo untersucht wird, ob die richtige Anzahl von getaschten und ungetaschten positiven und negativen Platten in der richtigen Anordnung vorliegt.

Die Plattensätze 18 werden dann in eine Druckerzeugungsstation 29 weiterbefördert, wo auf die beiden an den Stirnenden des Plattensatzes 18 angeordneten eingetaschten positiven Platten eine vorbestimmte Druckspannung senkrecht zur Plattenebene aufgebracht wird, so daß der gesamte Plattensatz durchgehend unter einer vorbestimmten axialen Druckspannung steht. Die so unter Druck gesetzten Plattensätze 18 werden dann in eine Dickenmeßstation 30 befördert, wo die Dicke des Plattensatzes senkrecht zur Plattenebene gemessen wird. In einer anschließenden Beilagfolien- oder -plattenanordnungsstation 31 werden dann auf eine oder beide Stirnflächen des Plattensatzes 18 Beilagfolien 22 oder Beilagplatten in der erforderlichen Stärke und Anzahl aufgelegt, wodurch der Plattensatz 18 bei dem voreingestellten Druck auf eine vorbestimmte Länge gebracht werden.

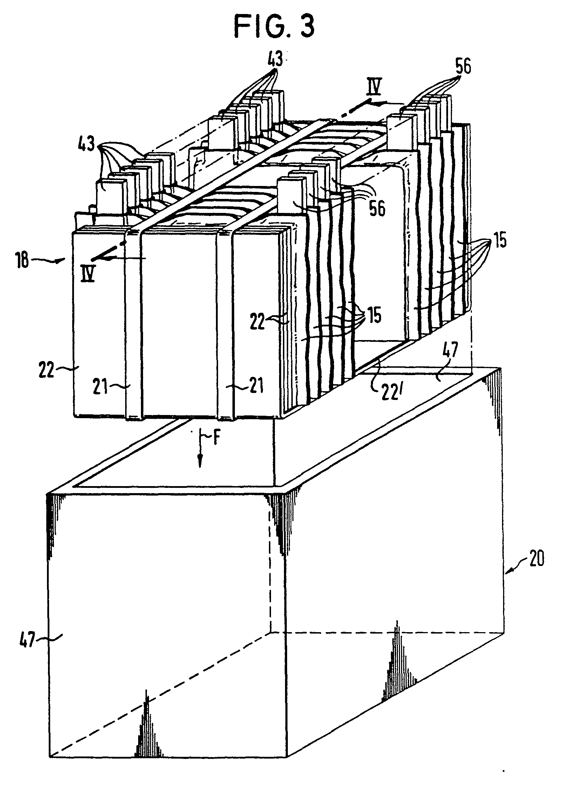

Anschließend werden die Plattensätze 18 dann in eine Banderolierstation 32 weiterbefördert, wo die nunmehr unter einer bestimmten Druckvorspannung stehenden und eine bestimmte Dicke aufweisenden Plattensätze gemäß Fig. 3 von schwefelsäurefesten Bändern 21 umschlossen werden, welche so gespannt sind, daß die einmal voreingestellte Druckvorspannung im Plattensatz 18 durch die Bänder 21 aufrechterhalten bleibt.

Nach Fig. 3 liegt somit jetzt ein problemlos handhabbarer Plattensatz 18 vorbestimmter Länge vor, dessen Platten und dazwischen befindliche Glasvlies-Separatorblätter 15 durchgehend unter der vorbestimmten Druckvorspannung stehen. In Fig. 3 ist zwischen den benachbarten Separatorblättern 15 ein deutlicher Abstand in Richtung der Längserstreckung des Plattensatzes 18 zu erkennen, welcher jedoch nur aufgrund der Darstellung der negativen Elektroden mit einer übertriebenen Dicke vorgetäuscht wird. In Wirklichkeit sind die Elektrodenplatten so dünn und die Separatorblätter so voluminös, daß sich die seitlich über die Platten vorstehenden verklebten Ränder benachbarter Taschen einander beruhren.

Die Plattensätze werden jetzt nach Fig 2 in eine elektrisch Prüfstation 33 befördert, wo durch Anlegen an eine Hochspannungsquelle eine Prüfung auf ausreichende elektrische Isolation der Platten gegeneinander durchgeführt wird.

Schließlich gelangen die geprüften Plattensätze 18 in eine Akkugehäusebeschickungsstation 34, wo die Plattensätze 18 mittels Beschickungskassetten in der aus Fig. 3 durch einen Pfeil F schematisch angedeuteten Weise in ein genau dazu passendes Akkumulatorengehäuse 20 oder in eine einzelne Zelle eines solchen Akkumulatorengehäuses von oben eingesetzt werden. Da der Plattensatz 18 aufgrund der erfindungsgemäßen Maßnahmen eine vorbestimmte Länge aufweist, paßt er so genau in das Innere des Akkumulatorengehäuses 20, daß auf die gegenüberliegenden Stirnflächen des Satzes von den Stirnwänden 47 des Akkumulatorengehäuses 20 ein definierter Druck ausgeübt wird, der die Wirkung der Spann-Bänder 21 unterstützt.

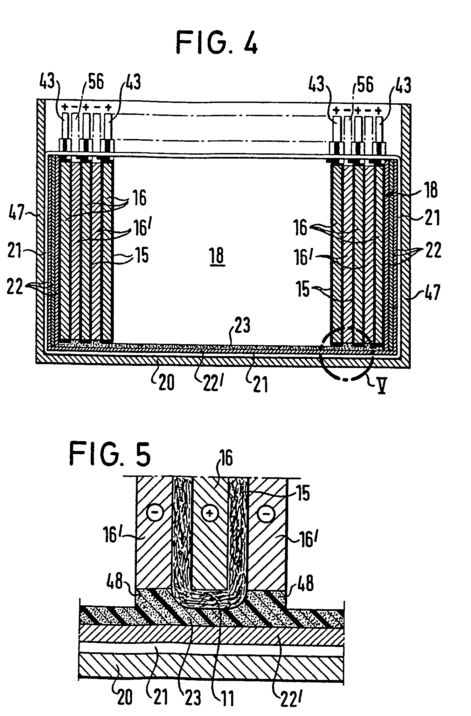

Fig. 4 zeigt den durch die erfindungsgemäßen Maßnahmen erzielten endgültigen Aufbau des Akkumulatorgehäuses unmittelbar vor der Interzellenverschweißung, die vorzugsweise nach dem COS-Verfahren erfolgt. Schließlich wird der Akkumulator in üblicher Weise verschlossen.

Nach Fig. 3 weist der erfindungsgemäße Akkumulatorenplattensatz 18 auf einer Seite oben die Anschlußfahnen 43 der positiven platte 16 und auf der entgegengesetzten Seite die Anschlußfahne 56 der nicht eingetaschten negativen Platten 16' auf.

Gegebenenfalls kann zwischen den Stationen 31 und 32 nach Fig. 2 noch eine Schmelzkleberaufbringungsstation 35 vorgesehen sein, wo gemäß Fig. 5 von unten eine aus einem Versteifungs-Schmelzkleber 23 bestehende profilierte Platte von unten auf den Plattensatz 18 aufgebracht wird, deren Querschnitt der unteren Fläche des Plattensatzes 18 entspricht. Diese Schmelzkleberplatte 23 ist so profiliert, daß streifenförmige bzw. rippenartige Vorsprünge 48 zwischen den Falträndern 11 der positiven Platten zu den unteren Rändern der negativen Platten 16' nach oben vorspringen. Durch Erhitzen des Schmelzklebers wird eine innige Verbindung mit dem Glasvliesmaterial und gegebenenfalls auch dem unteren Rand der negativen Platten 16' herbeigeführt.

Nach den Fig. 4 und 5 sind die äußersten der an den Stirnflächen des Plattensatzes 18 vorgesehenen Beilagfolien 22 unten durch eine Abdeckfolie 22' zu einer U-förmigen Gesamtabdeckung verbunden, wodurch die Unterseite des Plattensatzes 18 zusätzlich gegen mechanische Beschädigung geschützt wird.

Für das erfindungsgemäße Verfahren und den nach diesem Verfahren hergestellten Akkumulator eignen sich besonders gut negative Elektroden aus Kupferstreckmetall, weil hierbei die im Innern der Plattensätze entstehende Wärme besonders gut zu den Polen abgeführt wird.

**Patentansprüche**

1. Verfahren zum Herstellen von Akkumulatoren mit einem Akkumulatorengehäuse und darin angeordneten Akkumulatorplattensätzen mit abwechselnd positiven und negativen, durch ein Separatormaterial voneinander getrennten Platten, bei dem zur Bildung von Taschen zumindest um eine Sorte von Platten, bevorzugt die positiven Platten, jeweils ein Separatorblatt herumgefaltet und zumindest die an den Faltrand angrenzenden Seitenränder fest miteinander verbunden werden, worauf die eingetaschten Platten und die ggfs. nicht eingetaschten Platten zu Plattensätzen gestapelt und in ein Akkumulatorgehäuse eingebracht werden, wonach die Interzellenverschweißung und der Verschluß des Akkumulatorengehäuses erfolgen, dadurch gekennzeichnet, daß die aus mikroporösem Glasvlies bestehenden Separatorblätter (15) auf etwas mehr als die einfache oder doppelte Fläche der einzutaschenden Platten (16) zugeschnitten und wenigstens entlang den Seitenrändern (12, 13) und bevorzugt auch entlang der Oberränder (14) und ggfs. der Unterränder mit einem schwefelsäurefesten Glasvlies-Klebstoff (17) versehen werden, worauf die Platten (16) zwischen je zwei Separatorblättern angeordnet sowie die über die Platten (16) vorstehenden, aufeinander zu liegen kommenden Ränder (12, 13, 14) der Separatorblätter aufeinandergepreßt und ggfs. durchschnitten werden, bis der Klebstoff (17) ausgehärtet ist, und daß die gestapelten Plattensätze (18) senkrecht zur Plattenebene unter einen vorbestimmten Plattensolldruck gesetzt und durch eine an dem Plattensatz angelegten Spannvorrichtung (21) dieser Plattensolldruck zumindest solange aufrechterhalten wird, bis der Plattensatz (18) sich im Akkumulatorgehäuse (20) befindet, wobei dann der Plattensolldruck durch feste Anlage der Stirnseiten des Plattensatzes (18) an festen Teilen des Akkumulatorgehäuses (20) aufrechterhalten wird, wobei insbesondere die Spannvorrichtung aus zumindest einem um den Plattensatz (18) herumgeschlungenen schwefelsäurefesten Band (21) besteht und zweckmäßig auch noch mindestens zwei Bänder (21) im seitlichen Abstand um den Plattensatz (18) herumgeschlungen sind.

2. Verfahren nach Anspruch 1, dadurch gekennzeichnet, daß die Bänder um die Stirnflächen sowie Ober- und Unterseiten des Plattensatzes (18) herumgeschlungen sind.

3. Verfahren nach Anspruch 1 oder 2, dadurch gekennzeichnet, daß der Plattensatz (18) vor dem Einbringen in das Akkumulatorgehäuse (20) durch Anordnen von Beilagfolien oder -platten (22) auf eine durch den Innenraum des Akkumulatorgehäuses (20) bestimmte konstante Länge gebracht werden, wobei vorzugsweise der Plattensatz (18) zwei axial äußere Beilagfolien oder -platten (22) aufweist, die unten durch eine Bodenfolie- oder -platte (22') zu einer U-förmigen äußeren Abdeckfolie oder -platte vereinigt sind, die außen von den Bändern (21) umschlungen wird und/oder zweckmäßig die Beilagfolien oder -platten (22, 22') aus einem glatten, und/oder porösem schwefelsäurebeständigen Kunststoff wie PVC bestehen.

4. Verfahren nach einem der vorhergehenden Ansprüche, dadurch gekennzeichnet, daß ein Klebstoff (17) verwendet wird, der im wesentlichen lediglich senkrecht zur Auftragsfläche in das Glasvlies zumindest teilweise eindringt, nicht aber parallel zur Fläche in das Glasvlies eingesaugt wird und/oder daß ein Klebstoff (17) verwendet wird, der das verklebte Glasvlies versteift und seine Porosität auch an den von ihm beaufschlagten Stellen nicht beseitigt, wobei bevorzugt als Klebstoff (17) eine wässrige Dispersion von Vinylesterkopolymerisaten oder ein schwefelsäurefester Schmelzkleber verwendet wird, der vorzugsweise hochthixotrop ist.

5. Verfahren nach einem der vorhergehenden Ansprüche, dadurch gekennzeichnet, daß die aus Glasvlies bestehenden Separatorblätter (15) auf etwas mehr als die doppelte Fläche der einzutaschenden Platten (16) zugeschnitten und entlang der Seitenränder (12, 13) und bevorzugt auch entlang der Oberränder (14) mit einem schwefelsäurefesten Glasvlies-Klebstoff (17) versehen werden, worauf die Separatorblätter (15) um die Platten (16) herumgefaltet sowie die aufeinander zu liegen kommenden Ränder (12, 13, 14) aufeinandergepreßt werden, bis der Klebstoff (17) ausgehärtet ist, wobei vorzugsweise auch der Faltrand (11) mit einem schwefelsäurefesten Versteifungsklebstoff (23) versehen wird, wobei zweckmäßig der Versteifungsklebstoff (23) zusammen mit dem die übrigen Ränder (12, 13, 14) verklebenden Klebstoff (17) vor dem Falten aufgebracht wird und vorzugsweise von gleicher Art wie der die übrigen Ränder (12, 13, 14) verklebende Klebstoff (17) ist oder aber der Versteifungskleber (23) nach dem Bilden der Plattensätze (18) von außen auf dessen Unterseite aufgebracht wird, und zwar zweckmäßig so, daß der Versteifungsklebstoff (23) auf die Unterseite des Plattensatzes (18) nach dem Erzeugen des Plattensolldruckes und vorzugsweise vor dem Anbringen der Bänder (21) aufgebracht wird, wobei zweckmäßig ein entsprechend der Anordnung von eingetaschten positiven und dazwischenliegenden negativen Platten (16, 16') profilierte Platte (23') aus einem schmelzenden Versteifungskleber (23) auf die Unterseite des Plattensatzes (18) aufgebracht und durch Erhitzen mit den Falten der Separatorblätter (15) verbunden wird.

6. Verfahren nach einem der vorhergehenden Ansprüche, dadurch gekennzeichnet, daß das Glasvlies ein Mikroglasvlies mit einem mittleren Glasfaserdurchmesser von 0,5 bis 5 und insbesondere etwa 0,7 µm und einer maximalen Porengröße von 0,1 bis 40, insbesondere etwa 1 µm ist.

7. Verfahren nach einem der vorhergehenden Ansprüche dadurch gekennzeichnet, daß das Glasvlies vor dem Zusammenpressen des Plattensatzes (18) eine Stärke von 1 bis 3 und insbesondere etwa 2 mm hat.

8. Verfahren nach einem der vorhergehenden Ansprüche, dadurch gekennzeichnet, daß die Bänder (21) aus einer säurefesten Kunststoff-Folie insbesondere aus einer Polycarbonatfolie bestehen.

9. Akkumulator hergestellt durch das Verfahren nach einem der vorhergehenden Ansprüche, wobei insbesondere die positiven Platten (16) in durch Aneinanderlegen, insbesondere durch Faltung von Separatorblättern (15) aus Glasvlies gebildeten Taschen mit verklebten Rändern untergebracht sind und die aus abwechselnd negativen und positiven Platten (16, 16') sowie ggfs. Beilagfolien oder -platten (22) gebildeten Plattensätze (18) vorbestimmter Länge durch die herumgelegten Bänder (21) unter einer vorbestimmten Druckspannung in Richtung senkrecht zur Plattenoberfläche gehalten sind.

10. Vorrichtung zur Herstellung von Akkumulatoren nach Anspruch 9 gemäß dem Verfahren nach einem der Ansprüche 1 bis 8, gekennzeichnet, durch eine Plattenauflegestation (19), eine anschließende Beleimungsstation (24), eine darauf folgende Faltstation (25), eine anschließende Andruckstation (26), eine Plattenstapelstation (27), bevorzugt eine Prüfstation zur Prüfung, ob die Platten (16, 16') einwandfrei getascht bzw. nicht getascht sind und die richtige Anzahl von positiven und negativen Platten (16, 16') vorliegt, eine Druckerzeugungsstation (29) zum Anlegen eines vorbestimmten Druckes an die Plattensätze senkrecht zur Plattenoberfläche, eine Dickenmeßstation (30) zum Messen der Dicke des so unter Druck gesetzten Plattensatzes (18), eine Beilagfolien- oder -plattenanordnungsstation (31), in der die Plattensätze (18) durch Hinzufügung von Beilagfolien oder -platten (22) auf eine vorbestimmte Länge gebracht werden, eine Banderolierstation (32) zum Umschlingen der Plattensätze (18) mit den Bändern (21) zwecks Fixierung der vorbestimmten Druckvorspannung in den Plattensätzen (18), bevorzugt einer elektrischen Prüfstation (33) zur Prüfung der Isolationsgüte und eine Akkumulatorengehäusebeschickungsstation (34) zum Einbringen der Plattensätze (18) vorbestimmter Länge und Druckvorspannung in das Akkumulatorgehäuse (20), wobei insbesondere zwischen der Beilagfolien- oder -plattenanordnungsstation (31) und der Banderolierstation (32) eine Schmelzkleberaufbringungsstation (35) zur Aufbringung von Schmelzkleber auf die Unterseite des Plattensatzes (18) vorgesehen ist.

## Revendications

1. Procédé de fabrication d'accumulateurs comportant un boîtier d'accumulateur dans lequel sont disposés des groupes de plaques d'accumulateur alternativement positives et négatives, séparées les unes des autres par un matériau séparateur, procédé selon lequel, pour former des pochettes, une feuille de séparation est pliée autour d'au moins un type de plaques, de préférence les plaques positives, et au moins les bords latéraux adjacents au bord de pliage sont solidement reliés entre eux, puis les plaques mises en pochettes et, le cas échéant, les plaques sans pochettes, étant ensuite empilées en un groupe de plaques et introduites dans un boîtier d'accumulateur, puis on procède au soudage intercellulaire et à la fermeture du boîtier d'accumulateur, caractérisé en ce que les feuilles de séparation (15) composées d'un matelas microporeux de fibres de verre sont dimensionnées de manière à correspondre à un peu plus de la surface ou au double de la surface des plaques (16) à mettre dans les pochettes et sont pourvues d'une colle à matelas de fibres de verre (17) au moins le long des bords latéraux (12, 13), et de préférence aussi le long des bords supérieurs (14) et, le cas échéant, le long des bords inférieurs (17), puis les plaques (16) sont disposées respectivement entre deux feuilles de séparation et les bords (12, 13, 14) des feuilles de séparation, dépassant l'extrémité des plaques (16) et venant s'appliquer les uns sur les autres, sont pressés ensemble, et éventuellement découpés, jusqu'à ce que la colle (17) durcisse, et en ce que les groupes de plaques (18) empilés sont mis en place perpendiculairement au plan des plaques, avec une pression de consigne des plaques prédéterminée qui, au moyen d'un dispositif de serrage (21) disposé sur le groupe de plaques (18), est maintenu au moins jusqu'à ce que ledit groupe de plaques (18) se trouve dans le boîtier d'accumulateur (20), la pression de consigne des plaques étant ensuite maintenue sur des parties fixes du boîtier d'accumulateur (20) grâce à une disposition fixe des faces latérales du groupe de plaques (18), le dispositif de serrage se composant en particulier d'au moins une bande (21), résistante à l'acide sulfurique, enroulée autour du groupe de plaques (18) et, de façon appropriée, d'au moins deux autres bandes (21) enroulées autour du groupe de plaques (18) selon un espacement latéral.

2. Procédé selon la revendication 1, caractérisé en ce que les bandes sont enroulées autour des faces frontales ainsi que des côtés supérieur et inférieur du groupe de plaques (18).

3. Procédé selon la revendication 1 ou 2, caractérisé en ce que le groupe de plaques (18), avant d'être inséré dans le boîtier d'accumulateur (20), est placé sur une longueur constante, définie par l'espace intérieur du boîtier d'accumulateur (20), au moyen de la mise en place de feuilles ou de plaques de calage (22), le groupe de plaques (18) présentant de préférence deux feuilles ou plaques de calage (22) axialement extérieures qui sont reliées dans le bas par une feuille ou plaque de fond (22') de manière à former une feuille ou plaque extérieure de recouvrement en U qui est entourée à l'extérieur par les bandes (21) et/ou, de façon appropriée, les feuilles ou plaques de calage (22, 22') sont en matière plastique lisse et/ou en matière plastique poreuse résistante à l'acide sulfurique, comme du chlorure de polyvinyle.

4. Procédé selon l'une quelconque des revendications précédentes, caractérisé en ce qu'on utilise une colle (17) qui, pour l'essentiel, pénètre seulement perpendiculairement à la surface d'application dans le matelas de fibres de verre au moins partiellement, mais n'est pas absorbée parallèlement à la surface dans le matelas de fibres de verre et/ou en ce qu'on utilise une colle (17) qui rigidifie le matelas de fibres de verre collé et ne supprime pas sa porosité, même aux endroits où la colle est appliquée, la colle (17) utilisée étant de préférence une dispersion aqueuse de copolymères d'esters de vinyle ou une colle par fusion résistante à l'acide sulfurique qui, de préférence, est hautement tixotrope.

5. Procédé selon l'une quelconque des revendications précédentes, caractérisé en ce que les feuilles de séparation (15) composées d'un matelas de fibres de verre sont dimensionnées de manière à ce qu'elles correspondent à un peu plus du double de la surface des plaques (16) à mettre dans les pochettes et sont pourvues, le long des bords latéraux (12, 13), et de préférence aussi le long des bords supérieurs (14), d'une colle (17) en matelas de fibres de verre résistante à l'acide sulfurique, les feuilles de séparation (15) étant pliées autour des plaques (16) et les bords (12, 13, 14) venant s'appuyer les uns sur les autres sont pressés ensemble jusqu'à ce que la colle (17) durcisse, le bord de pliage (11) étant de préférence lui aussi pourvu d'une colle de renforcement (23) résistante à l'acide sulfurique qui, de façon appropriée, est appliquée, avant le pliage, en même temps que la colle (17) destinée aux autres bords (12, 13, 14) et est, de préférence, du même type que ladite colle (17) destinée aux autres bords (12, 13, 14), ou alors la colle de renforcement est appliquée après la formation des groupes de plaques (18), par l'extérieur, sur la face inférieure de ceux-ci, à savoir d'une manière appropriée telle que la colle de renforcement (23) soit appliquée sur la face inférieure du groupe de plaques (18) après création de la pression de consigne des plaques et, de préférence, avant la mise en place des bandes (21), une plaque (23'), profilée en fonction de la disposition de plaques positives (16) dans des pochettes et de plaques négatives (16') situées entre lesdites plaques positives, à base de colle de renforcement (23') en liquescence, étant appliquée sur la face inférieure du groupe de plaques (18) et fixée aux plis des feuilles de séparation (15) par réchauffement.

6. Procédé selon l'une quelconque des revendications précédentes, caractérisé en ce que le matelas de fibres de verre est un micro-matelas de fibres de verre comportant des fibres de verre dont le diamètre moyen est compris entre 0,5 et 5 µm, de préférence d'environ 0,7 µm, et des pores dont la grandeur maximale est comprise entre 0,1 et 40 µm, et est plus particulièrement de 1 µm.

7. Procédé selon l'une quelconque des revendications précédentes, caractérisé en ce que le matelas de fibres de verre, avant l'assemblage par pression du groupe de plaques (18), a une épaisseur de 1 à 3 mm, et plus particulièrement d'environ 2 mm.

8. Procédé selon l'une quelconque des revendications précédentes, caractérisé en ce que les bandes (21) sont composées d'une feuille de matière plastique résistante à l'acide sulfurique, en particulier une feuille de polycarbonate.

9. Accumulateur fabriqué au moyen du procédé selon l'une quelconque des revendications précédentes, dans lequel en particulier les plaques positives (16) sont mises en place, avec les bords collés, dans des pochettes formées par juxtaposition et en particulier par pliage de feuilles de séparation (15) en matelas de fibres de verre, et les groupes de plaques (18) d'une longueur prédéterminée, formés alternativement de plaques positives (16) et de plaques négatives (16') ainsi qu'éventuellement de feuilles ou plaques de calage (22), sont maintenus, dans la direction perpendiculaire à la surface des plaques, sous une contrainte de compression prédéterminée, au moyen des bandes (21) enroulées.

10. Dispositif pour fabriquer des accumulateurs selon la revendication 9 avec le procédé selon l'une quelconque des revendications 1 à 8, caractérisé en ce qu'il comporte un poste de chargement de plaques (19), suivi d'un poste d'encollage (24), puis d'un poste de pliage (25), suivi d'un poste de pression (26), d'un poste d'empilage des plaques (27), de préférence d'un poste pour contrôler si les plaques (16, 16') ont respectivement été parfaitement mises en pochettes ou non mises en pochettes et si le nombre de plaques positives et négatives (16, 16') est exact, un poste de production de pression (29) pour appliquer une pression prédéterminée sur les groupes de plaques perpendiculairement à la surface des plaques, un poste de mesure d'épaisseur (30) pour mesurer l'épaisseur du groupe de plaques (18) ainsi mis sous pression, un poste de mise en place de feuilles ou plaques de calage (31) dans lequel les groupes de plaques (18) sont amenés sur une longueur prédéterminée par adjonction de feuilles ou plaques de calage (22), un poste d'application de bandes (32) pour enrouler les groupes de plaques (18) avec les bandes (21) pour fixer dans lesdits groupes de plaques (18) la contrainte de pression prédéterminée, de préférence un poste de contrôle électrique pour vérifier la qualité d'isolation et un poste de chargement du boîtier d'accumulateur (34) pour insérer les groupes de plaques (18) d'une longueur prédéterminée dans le boîtier d'accumulateur (20), un poste d'application de colle de fusion (35) étant prévu plus particulièrement entre le poste de mise en place de feuilles ou plaques de calage (31) et le poste d'application de bandes (32) pour appliquer la colle sur la face inférieure du groupe de plaques (18).

**Claims**

1. A method of manufacturing accumulators having an accumulator housing and arranged therein accumulator plate sets with alternating positive and negative plates separated from one another by a separator material, wherein, for the formation of pockets, a separator sheet is in each case folded around at least one type of plate, preferably around the positive plates, and at least the side edges adjoining the folded edge are fixedly connected to one another, whereupon the pocketed plates and the optionally non-pocketed plates are stacked into plate sets and are inserted into an accumulator housing, whereafter the intercell welding and the closure of the accumulator housing take place, characterised in that the separator sheets (15) consisting of a microporous glass fleece are cut to somewhat more than the single or double area of the plates (16) to be pocketed and are provided with an acid resistant glass fleece adhesive (17) at least along the side edges (12, 13) and preferably also along the upper edges (14), and optionally also along the lower edges, whereupon the plates (16) are arranged in each case between two separator sheets and the edges (12, 13, 14) of the separator leaves which project beyond the plates (16) and come into contact with each other are pressed together, and optionally cut through, until the adhesive (17) is hardened; and in that the stacked plate sets (18) are set under a predetermined desired plate pressure perpendicular to the plane of the plates, and this desired plate pressure is maintained by a clamping device (21) applied to the plate set at least until the plate set is located in the accumulator housing, with the desired plate pressure then being maintained by firm contact of the end faces of the plate set (18) on fixed parts of the accumulator housing (20), wherein, in particular, the clamping device comprises at least one sulphuric acid resistant band (21) placed around the plate set (18), and at least two bands are also expediently placed around the plate set (18) and are spaced apart sideways.

2. A method in accordance with claim 1, characterised in that the bands are placed around the end faces and also the upper and lower sides of the plate set (18).

3. A method in accordance with claim 1 or claim 2, characterised in that the plate set (18) is brought, by the provision of spacing foils or plates (22), to a constant length determined by the inner space of the accumulator housing (20), prior to introducing it into the accumulator housing (20), with the plate set (18) preferably having two axially outer spacer foils or plates (22) which are united at the bottom by a base foil or base plate (22') into a U-shaped external cover foil or cover plate around which the bands (21) are externally placed, and/or in that the spacer foils or plates (22, 22') expediently consist of a smooth and/or porous sulphuric acid resistant plastic such as PVC.

4. A method in accordance with one of the preceding claims, characterised in that an adhesive (17) is used which penetrates at least partially into the glass fleece substantially only perpendicular to the surface to which it is applied, but is not however sucked into the glass fleece parallel to the surface, and/or in that an adhesive (17) is used which stiffens the bonded glass fleece and does not remove its porosity even at the positions at which is is applied, with an aqueous dispersion of vinyl ester copolymers or a sulphuric acid resistant fusible adhesive, which is preferably highly thixotropic, preferably being used as the adhesive.

5. A method in accordance with one of the preceding claims, characterised in that the separator sheets (15) consisting of glass fleece are cut to somewhat more than twice the area of the plates (16) to be pocketed and are provided along the side edges (12, 13) and preferably also along the top edge (14) with a sulphuric acid resistant glass fleece adhesive (17), whereupon the separator sheets (15) are folded around the plates (16) and the edges (12, 13, 14) which come into contact with one another are pressed together until the adhesive (17) has hardened (cured), with the folded edge (11) preferably also being provided with a sulphuric acid resistant stiffening adhesive (23), with the stiffening adhesive (23) expediently being applied prior to folding together with the adhesive (17) which bonds the remaining edges (12, 13, 14), and preferably being of the same kind as the adhesive (17) which bonds the remaining edges (12, 13, 14), or in that the stiffening adhesive (23) is applied after the forming of the plate sets (18) from the outside to its lower side, and indeed expediently in such a way that the stiffening adhesive (23) is applied to the lower side of the plate set (18) after the generation of the desired plate pressure, and preferably prior to the application of the bands (21), wherein a plate (23') consisting of a fusable stiffening adhesive (23), which is profiled in accordance with the arrangement of pocketed positive and negative plates (16, 16') lying therebetween, is expediently applied to the lower side of the plate set (18) and is connected with the folds of the separator leaves (15) by heating.

6. A method in accordance with one of the preceding claims, characterised in that the glass fleece is a microglass fleece with a mean glass fiber diameter of 0.5 to 5 μm and in particular of approximately 0.7 μm and a maximum pore size of 0.l to 40 μm and in particular of approximately 1 μm.

7. A method in accordance with one of the preceding claims, characterised in that the glass fleece has a thickness prior to pressing together of the plate set (18) of 1 to 3 mm and in particular of approximately 2 mm.

8. A method in accordance with one of the preceding claims, characterised in that the bands (21) consist of an acid resistant plastic foil, in particular of a polycarbonate foil.

9. Accumulator manufactured by the method of one of the preceding claims wherein, in particular, the positive plates (16) are accommodated in pockets with bonded edges formed by the laying together of and in particular by the folding of separator sheets (15) of glass fleece, and the plate sets (18) of predetermined length formed from the alternating negative and positive plates (16, 16'), and also optionally from the spacer foils or plates (22), are held under a predetermined pressure in the direction perpendicular to the plate surface by the bands (21) placed therearound.

10. Apparatus for manufacturing accumulators in accordance with claim 9 by the method of one of the claims 1 to 8, characterised by a plate laying station (19), by a subsequent glueing station (24), by a folding station (25) following the latter, by a subsequent pressing station (26), by a plate stacking station (27), preferably by a test station for testing whether the plates (16, 16') are pocketed in troublefree manner, or are not pocketed, and whether the correct number of positive and negative plates (16, 16') is present, by a pressure generating station (29) for applying a predetermined pressure to the plate sets perpendicular to the plate surface, by a thickness measuring station (30) for measuring the thickness of the plate set (18) which is so set under pressure, by a spacer foil or spacer plate arranging station (31) in which the plate sets (18) are brought to a predetermined length by the addition of spacer foils or spacer plates (22), by a banderoling station (32) for placing the bands (21) around the plate sets (18) for the purpose of fixing the predetermined compressing stress in the plate sets (18), preferably by an electrical testing station (33) for testing the quality of the insulation, and by an accumulator housing loading station (34) for introducing the plate sets (18) with a predetermined length and compressive stress into the accumulator housing (20), wherein, in particular, a fusible adhesive application station (35) for applying fusible adhesive to the lower side of the plate sets (18) is provided between the spacer foil or spacer plate arranging station (31) and the banderoling station (32).

EP  0 240 915  B1

FIG. 1

1

# FIG. 2

EP 0 240 915 B1

# FIG. 3

# FIG. 4

# FIG. 5